# EUROPEAN PATENT APPLICATION

(11) **EP 3 118 478 A1**
(43) Date of publication of application: **18.01.2017**
(21) Application number: 15793239.3
(22) Date of filing: 20.03.2015
(51) Int. Cl.: F16F 9/32, F15B 15/14, F15B 15/18, B61F 5/24

(54) **CYLINDER DEVICE**

(30) Priority: 12.05.2014 JP 2014098317
(71) Applicant: KYB Corporation, Tokyo 105-6111 (JP)
(72) Inventor: OGAWA, Takayuki, Tokyo 105-6111 (JP)
(74) Representative: Müller-Boré & Partner Patentanwälte PartG mbB
(86) International application number: PCT/JP2015/058424
(87) International publication number: WO 2015/174140

(57) **Abstract**

An object is to provide a cylinder device which can be used over a long period of time. The cylinder device includes a damper (10), a pump (30), a motor (31) and an external tank (24). The damper (10) has a cylinder (11), a first bracket (12), a piston (13), a piston rod (14) and a second bracket (15). The piston (13) is slidably inserted into an interior of the cylinder (11) . The piston rod (14) is inserted into the cylinder (11) and connects the piston (13) to an end located in the cylinder (11). The pump (30) is disposed at one of right and left sides with respect to a central axis of the cylinder (11). The motor (31) is disposed at the one side which is the same side as the pump (30) with respect to the central axis of the cylinder (11). The external tank (24) is disposed at the other side with respect to the central axis of the cylinder (11).

## Description

### Technical Field

The present invention relates to a cylinder device.

### Background Art

Patent Document 1 discloses a conventional cylinder device. The cylinder device includes a cylinder, a first bracket, a piston, a piston rod, a second bracket, an external cylinder, a tank and a damping force generating mechanism. The first bracket is coupled to one of two ends of the cylinder. The piston is slidably inserted into the cylinder thereby to divide an interior of the cylinder into a rod-side chamber and a piston-side chamber. The piston rod is inserted through the other end of the cylinder into the interior of the cylinder, extending along a central axis of the cylinder. The piston rod has an end which is located inside the cylinder and coupled to the piston. The piston rod has an end which is located outside the cylinder and coupled to the second bracket. The external cylinder is located outside the cylinder so as to cover the cylinder. The tank is formed in a space defined between the cylinder and the external cylinder. The damping force generating mechanism controls flow of an operating fluid caused by sliding of the piston thereby to generate a damping force. The damping force generating mechanism is coupled to a part of an outside surface of the external cylinder. One of the first and second brackets is coupled to a body of railroad vehicle and the other bracket is coupled to a truck while the cylinder device is mounted transversely such that the central axis of the cylinder and the piston rod extend in a horizontal direction. In the cylinder device, a damping force can be generated since the operating fluid flows between the rod-side chamber and the cylinder-side chamber through the damping force generating mechanism upon expansion/contraction of the cylinder device.

### Prior Art Document

### Patent Documents

Patent Document 1: Japanese Patent Application Publication No. JP-A-2012-77808

### Summary of the Invention

### Problem to Be Overcome By the Invention

However, the damping force generating mechanism is coupled to a part of an outer surface of the external cylinder in the cylinder device described in Patent Document 1. Accordingly, when the cylinder device is mounted between the body and the truck of the railroad vehicle while the damping force generating mechanism is mounted transversely such that the damping force generating mechanism is located at the right or left side with respect to the piston rod, a position of the center of gravity of the cylinder device is biased to the side where the damping force generating mechanism is located with respect to the piston rod. When the cylinder device is expanded/contracted with the position of the center of gravity thereof being biased to the right or left side with respect to the piston rod, there is a possibility that loads of the first and second brackets would be biased with the result that the brackets would shortly have troubles.

The present invention was made in view of the foregoing circumstances in the conventional art, and an object thereof is to provide a cylinder device which can be used over a long period of time.

### Means for Overcoming the Problem

A cylinder device according to the present invention includes a damper, a pump, a motor and a tank. The damper has a cylinder, a first bracket, a piston, a piston rod and a second bracket. The first bracket is coupled to one of two ends of the cylinder. The piston is slidably inserted into the cylinder. The piston rod is inserted into the cylinder and has one of two ends coupled to the piston. The second bracket is coupled to the other end of the piston rod. The pump is disposed at one of right and left sides with respect to a central axis of the cylinder. The pump supplies an operating fluid to the damper. The motor is disposed at the one side of right and left which is the same side as the pump with respect to the central axis of the cylinder. The motor drives the pump. The tank is disposed at the other side of right and left with respect to the central axis of the cylinder. The tank stores the operating fluid.

In the cylinder device, the pump and the motor are disposed at one of the right and left sides with respect to the central axis of the cylinder, and the tank is disposed at the other side. Accordingly, the cylinder device can be balanced between a right part and a left part thereof by adjusting the size of the tank and/or an amount of the operating fluid. As a result, since the position of the center of gravity of the cylinder device can be set near the central axis of the piston rod, a uniform load can be applied to each of the first and second brackets upon expansion/contraction of the cylinder device. Consequently, failure of the brackets is less likely to occur even after long-term use of the cylinder device.

Accordingly, the cylinder device according to the present invention can be used over a long period of time.

### Brief Description of the Drawings

Fig. 1 is a circuit diagram of a cylinder device of a first embodiment;
Fig. 2 is a perspective view of the cylinder device of the first embodiment;
Fig. 3 is a plan view of the cylinder device of the first embodiment;
Fig. 4 is a horizontal sectional view of the cylinder device of the first embodiment; and
Fig. 5 is a vertical sectional view of the cylinder device of the first embodiment.

### Mode for Carrying Out the Invention

A first embodiment of the cylinder device according to the present invention will be described with reference to the accompanying drawings.

### First Embodiment

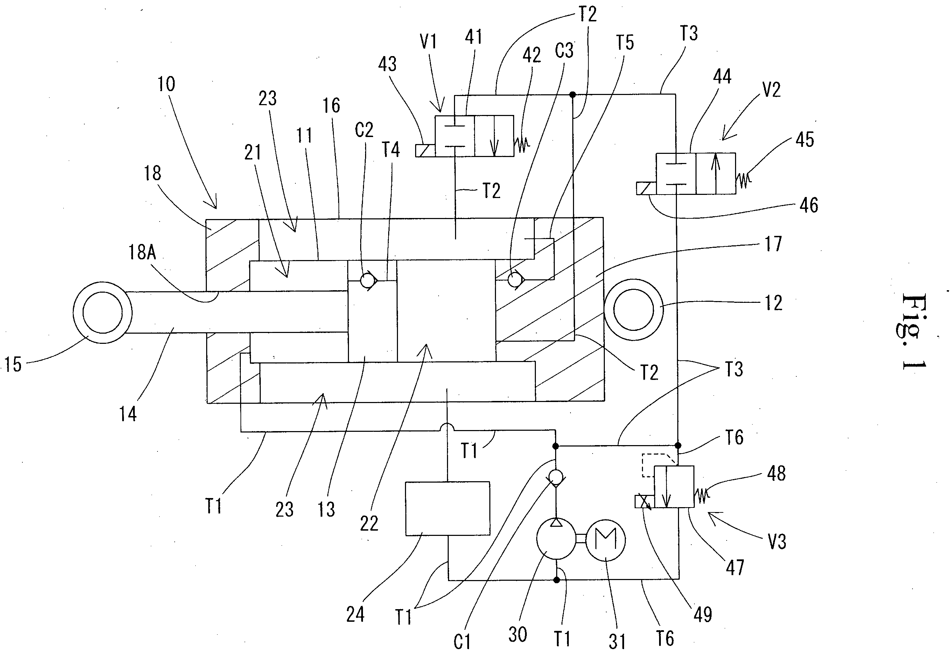

The cylinder device of the first embodiment includes a damper 10, a pump 30, a motor 31 and an external tank 24 serving as a tank separate from the damper 10, as shown in Fig. 1. The cylinder device also includes passages T1 to T6 through which an operating oil serving as an operating fluid flows and a plurality of valves V1 to V3 and C1 to C3 provided in the passages T1 to T6. The passages T1 to T6 are a first passage T1, a second passage T2, a third passage T3, a fourth passage T4, a fifth passage T5 and a discharge passage T6. The plural valves V1 to V3 and C1 to C3 are a first on-off valve V1, a second on-off valve V2, a relief valve V3 serving as a pressure regulation valve, a first check valve C1, a second check valve C2 and a third check valve C3.

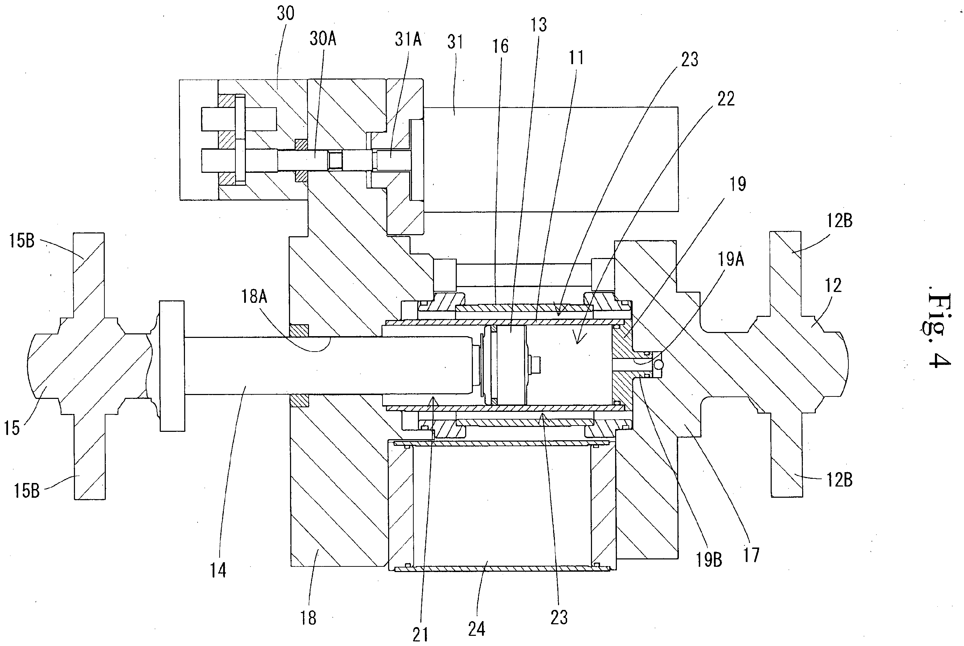

The damper 10 includes a cylinder 11, a first bracket 12, a piston 13, a piston rod 14, a second bracket 15, an external cylinder 16, a cover member 17 and a rod guide 18, as shown in Figs. 1, 4 and 5. The cylinder 11 has a cylindrical shape. The cylinder 11 has one of two ends (an end of the cylinder 11 located on the right as viewed in Fig. 4) to which a distal end member 19 is attached (see Fig. 4). The distal end member 19 has a protrusion 19B protruding from a center thereof. The distal end member 19 is formed with a flow passage 19A extending through the center thereof. More specifically, the flow passage 19A extends through the protrusion 19B of the distal end member 19.

The piston 13 has a substantially columnar shape and an outer diameter slightly smaller than an inner diameter of the cylinder 11. The piston 13 is slidably inserted into the cylinder 11 thereby to divide an interior of the cylinder 11 into a rod-side chamber 21 and a piston-side chamber 22. The rod-side chamber 21 and the piston-side chamber 22 are filled with the operating oil.

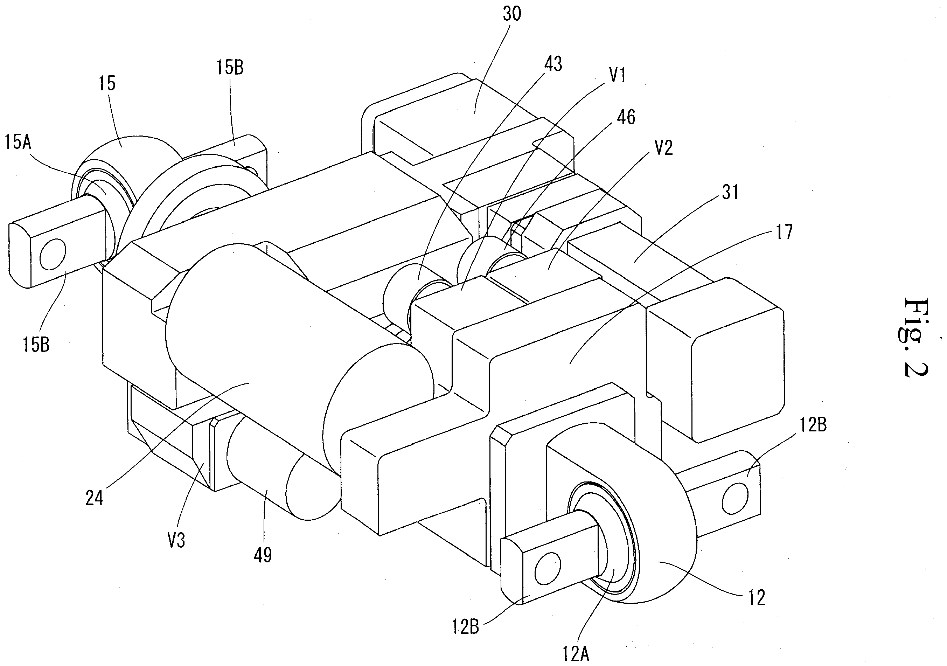

The piston rod 14 has a columnar shape and an end which is located in the cylinder 11 (an end of the piston rod 14 located on the right as viewed in Fig. 4) and extends through the center of the piston 13 to be connected to the piston 13, as shown in Figs. 1 and 4. The piston rod 14 extends on a central axis line of the cylinder 11. The piston rod 14 has an end which is located outside the cylinder 11 (an end of the piston rod 14 located on the left as viewed in Fig. 4) to which is coupled a second bracket 15 to be attached to a railroad vehicle or the like. The second bracket 15 has a joint 15B connected thereto via a rubber bush 15A and extending in a direction perpendicular to a central axis of the piston rod 14, as shown in Fig. 2.

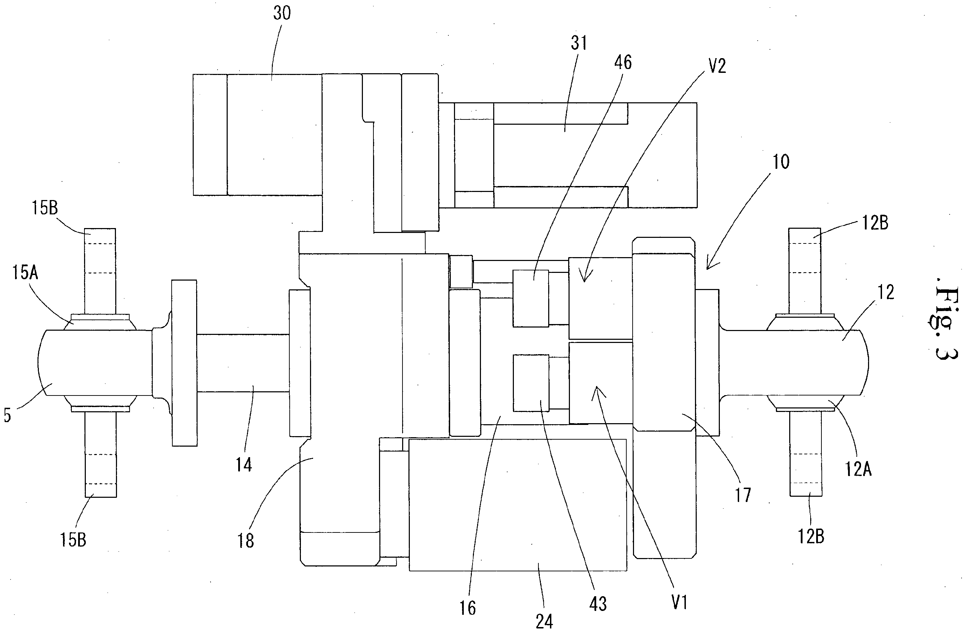

The external cylinder 16 is located outside the cylinder 11 and disposed to be coaxial with the cylinder 11, as shown in Figs. 1, 4 and 5. Ends of the cylinder 11 and the external cylinder 16 (ends of the cylinder 11 and the external cylinder 16 located on the right as viewed in Figs. 1 and 4) are closed by the cover member 17. The cover member 17 has a side which is opposed to the cylinder 11 (a right side as viewed in Fig. 2) and to which the first bracket 12 is coupled, as shown in Figs. 2 to 4. The first bracket 12 has a joint 12B connected thereto via a rubber bush 12A and extending in a direction perpendicular to the central axis of the cylinder 11 (see Fig. 2). The first bracket 12 has a central part located on the central axis line of the cylinder 11.

The rod guide 18 has a through-hole 18A formed to extend therethrough as shown in Figs. 1 and 4. The piston rod 14 extends through the through-hole 18A. The other ends of the cylinder 11 and the external cylinder 16 (the ends of the cylinder 11 and the external cylinder 16 located on the left as viewed in Fig. 4) are closed by the rod guide 18. The inner tank 23 is formed by being surrounded by the cylinder 11, the external cylinder 16, the cover member 17 and the rod guide 18. More specifically, the inner tank 23 is formed in a space defined between the cylinder 11 and the external cylinder 16. The inner tank 23 is filled with the operating oil.

The first passage T1 communicates with the inner tank 23, the external tank 24, the pump 30, the first check valve C1, and the rod-side chamber 21 serially in this order, as shown in Fig. 1. The external tank 24 has a cylindrical shape. The external tank 24 is filled with the operating oil and a gas. Since the cylinder device is provided with the external tank 24, a capacity of the inner tank 23 can be rendered smaller. As a result, the diameter of the damper 10 can be rendered smaller in the cylinder device.

The pump 30 is driven by the motor 31 thereby to be capable of feeding the operating oil only in one direction from the external tank 24 to the rod-side chamber 21. The first check valve C1 allows the operating oil to flow from the pump 30 toward the rod-side chamber 21 but prevents the operating oil from flowing from the rod-side chamber 21 toward the pump 30. The pump 30 and the motor 31 are disposed at one of the right and left sides with respect to the central axis of the cylinder 11 (the upper side of the cylinder 11 as viewed in Fig. 4).

The second passage T2 communicates between the piston-side chamber 22 and the inner tank 23. The first on-off valve V1 is provided in the middle of the second passage T2. The first on-off valve V1 is an electromagnetic on-off valve and has a valve body 41 opening and closing the second passage T2, a spring 42 imparting an elastic force in a direction such that the valve body 41 is opened and a solenoid 43 imparting a thrust force in a direction such that the valve body 41 is closed.

The third passage T3 diverges from the first passage T1 at a downstream side of the first check valve C1 and joins the second passage T2 at an upstream side of the first on-off valve V1. The second on-off valve V2 is provided in the middle of the third passage T3. The second on-off valve V2 is an electromagnetic on-off valve and has a valve body 44 opening and closing the third passage T3, a spring 45 imparting an elastic force in a direction such that the valve body 44 is opened, and a solenoid 46 imparting a thrust force in a direction such that the valve body 44 is closed.

The fourth passage T4 is formed in the piston 13 and communicates between the piston-side chamber 22 and the rod-side chamber 21. The second check valve C2 is provided in the middle of the fourth passage T4. The second check valve C2 allows the operating oil to flow from the piston-side chamber 22 into the rod-side chamber 21 and prevents the operating oil from flowing from the rod-side chamber 21 into the piston-side chamber 22.

The fifth passage T5 is formed in the cover member 17 and communicates between the piston-side chamber 22 and the inner tank 23. The protrusion 19B of the distal end member 19 attached to the cylinder 11 is fitted into the fifth passage T5, as shown in Fig. 4. The third check valve C3 is provided in the middle of the fifth passage T5, as shown in Fig. 1. The third check valve C3 allows the operating oil to flow from the inner tank 23 into the piston-side chamber 22 and prevents the operating oil from flowing from the piston-side chamber 22 into the inner tank 23.

The discharge passage T6 diverges from the third passage T3 at an upstream side of the second on-off valve V2 and joins the first passage T1 located at the upstream side of the pump 30 and at a downstream of the external tank 24. The discharge passage T6 communicates with the rod-side chamber 21 through the third and first passages T3 and T1 and further communicates with the external tank 24 through the first passage T1. More specifically, the discharge passage T6 communicates between the rod-side chamber 21 of the cylinder 11 and the external tank 24. The relief valve V3 is provided in the middle of the discharge passage T6. The relief valve V3 is a magnetic proportional relief valve and has a valve body 47 opening and closing the discharge passage T6, a spring 48 imparting an elastic force in a direction such that the valve body 47 is closed and a proportional solenoid 49 imparting a thrust force in a direction such that the valve body 47 is opened. The relief valve V3 can regulate a valve opening pressure by regulating an amount of electric current flowing into the proportional solenoid 49. More specifically, when the pressure in the rod-side chamber 21 exceeds the valve opening pressure, a resultant force of a thrust force due to the pressure and a thrust force produced by the proportional solenoid 49 overcomes the elastic force of the spring 48 imparted in the direction such that the valve body 47 is closed, thereby opening the discharge passage T6. The valve opening pressure of the relief valve V3 is rendered minimum when an amount of electric current supplied to the proportional solenoid is maximized. The valve opening pressure is rendered maximum when no electric current is supplied to the proportional solenoid 49.

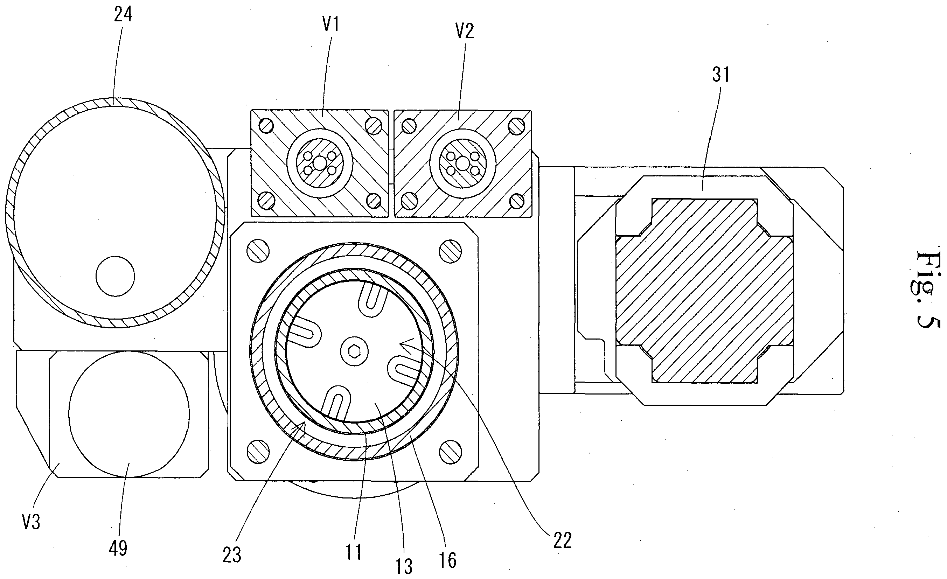

One of the first and second brackets 12 and 15 is coupled to the body of railroad vehicle, and the other is coupled to a truck, as shown in Figs. 2 to 5, so that the cylinder device is mounted transversely such that the central axis of the cylinder 11 and the piston rod 14 extend in a horizontal direction. In this state, the pump 30 and the motor 31 are disposed at one of the right and left sides with respect to the central axis of the cylinder 11 (above the cylinder 11 as viewed in Fig. 4), and the external tank 24 and the relief valve V3 are disposed at the other side (below the cylinder 11 as viewed in Fig. 4). The pump 30 and the motor 31 are disposed so that a rotating shaft 30A of the pump 30 and a rotating shaft 31A of the motor 31 connected to the rotating shaft 30A of the pump 30 are parallel to the central axis of the cylinder 11 and the piston rod 14, as shown in Fig. 4. The external tank 24 is disposed so that a central axis thereof is parallel to the central axis of the cylinder 11 and the piston rod 14. Furthermore, the first on-off valve V1 and the second on-off valve V2 are disposed above the damper 10 as shown in Figs. 2 and 5. More specifically, the first on-off valve V1 and the second on-off valve V2 are disposed between the pump 30 and the motor 31, and the external tank 24 and the relief valve V3. Thus, the pump 30, the motor 31, the external tank 24, the first on-off valve V1, the second on-off valve V2 and the relief valve V3 are disposed around the cylinder 11 thereby to be integrated with the cylinder 11.

This cylinder device can function as a damper as will be described below.

When the first on-off valve V1 and the second on-off valve V2 are closed, the fourth passage T4, the first passage T1 going through the discharge passage T6, and the fifth passage T5 cause the rod-side chamber 21, the external tank 24, the inner tank 23 and the piston-side chamber 22 to communicate with one another in a row. The fourth passage T4, the discharge passage T6 and the fifth passage T5 are set so that the operating oil flows in one direction through these passages. Accordingly, when an external force expands/contracts the cylinder device, the operating oil in the cylinder 11 is returned through the first discharge passage T1 going through the discharge passage T6 into the external tank 24 and the inner tank 23. A shortage of the operating oil in the cylinder 11 is supplied from the inner tank 23 to the cylinder 11 through the fifth passage T5. In this case, the relief valve V3 resists the operating oil flowing in the discharge passage T6, thereby functioning as a pressure control valve regulating the pressure in the cylinder 11 to a valve opening pressure. Consequently, the cylinder device functions as a damper.

This cylinder device can further generate a desired thrust force in an expansion direction as will be explained below.

The first on-off valve V1 of the cylinder device is closed, and the second on-off valve V2 is opened. The motor 31 is then rotated at a predetermined rotation speed according to the expansion/contraction state of the cylinder device thereby to drive the pump 30, so that the operating oil is supplied from the external tank 24 into the cylinder 11. Thus, when the operating oil is supplied while the rod-side chamber 21 is in communication with the piston-side chamber 22, the piston 13 is pressed toward the rod-side chamber 21 (leftward as viewed in Figs. 1 and 4), thereby exerting a thrust force in the expansion direction. When the pressures in the rod-side chamber 21 and the piston-side chamber 22 exceed the valve opening pressure of the relief valve V3, the relief valve V3 is opened with the result that the operating oil is returned through the discharge passage T6 into the external tank 24. The pressures in the rod-side chamber 21 and the piston-side chamber 22 thus correspond to the valve opening pressure of the relief valve V3 in the cylinder device. More specifically, the pressures in the rod-side chamber 21 and the piston-side chamber 22 can be controlled by an amount of electric current supplied to the relief valve V3. Consequently, the cylinder device can exert a thrust force in the expansion direction, which thrust force has a value obtained by multiplying a difference between pressure-receiving areas of the piston-side and rod-side chambers 22 and 21 of the piston 13 by pressures in the piston-side and rod-side chambers 22 and 21 controlled by an amount of electric current supplied to the relief valve V3.

This cylinder device can exert a desired thrust force in a contraction direction as will be explained below.

The first on-off valve V1 of the cylinder device is opened, and the second on-off valve V2 is closed. The motor 31 is then rotated at a predetermined rotation speed according to the expansion/contraction state of the cylinder device thereby to drive the pump 30, so that the operating oil is supplied from the external tank 24 into the rod-side chamber 21. Thus, when the operating oil is supplied from the external tank 24 into the rod-side chamber 21 while the piston-side chamber 22 and the inner tank 23 are in communication with each other through the second passage T2, the piston 13 is pressed toward the piston-side chamber 22 (rightward as viewed in Figs. 1 and 4) . As a result, the cylinder device exerts a thrust force in the contraction direction. As described above, the cylinder device can control the pressure in the rod-side chamber 21 on the basis of an amount of electric current supplied to the relief valve V3. Consequently, the cylinder device can exert a thrust force in the contraction direction, which thrust force has a value obtained by multiplying the pressure-receiving area at the rod-side chamber 21 side in the piston 13 by the pressure in the rod-side chamber 21 controlled by an amount of electric current supplied to the relief valve V3.

This cylinder device includes the damper 10, the pump 30, the motor 31 and the external tank 24. The damper 10 has the cylinder 11, the first bracket 12, the piston 13, the piston rod 14 and the second bracket 15. The first bracket 12 is coupled to one of two ends of the cylinder 11. The piston 13 is slidably inserted into the cylinder 11. The piston rod 14 is inserted into the cylinder 11 and has the end which is located inside the cylinder 11 and to which the piston 13 is coupled. The second bracket 15 is coupled to the end of the piston rod 14, which end is located outside the cylinder 11. The pump 30 is disposed at one of the right and left sides with respect to the central axis of the cylinder 11. The pump 30 supplies the operating oil to the damper 10. The motor 31 is disposed at the one side of right and left which is same side as the pump 30 is disposed with respect to the central axis of the cylinder 11. The motor 31 drives the pump 30. The external tank 24 is disposed at the other side of right and left with respect to the central axis of the cylinder 11. The external tank 24 stores an operating fluid.

The pump 30 and the motor 31 are disposed at one of right and left sides with respect to the central axis of the cylinder 11, and the external tank 24 is disposed at the other side. Accordingly, this cylinder device can be easily balanced between the right part and the left part thereof by adjusting the size of the external tank 24 and/or an amount of the operating oil. As a result, since the position of the center of gravity can be set near the central axis of the piston rod 14, a uniform load can be applied to the first and second brackets 12 and 15 upon expansion/contraction of the cylinder device. Consequently, failure of the brackets 12 and 15 (cracks occurring in the rubber bushes 12A and 15A and the like) is less likely to occur even after long-term use of the cylinder device.

Accordingly, the cylinder device of the first embodiment can be used over a long period of time.

Furthermore, the relief valve V3 is disposed at the other side of right and left which is the same side as the external tank 24 is disposed with respect to the central axis of the cylinder 11. Consequently, the external tank 24 adjusting the right and left balance of the cylinder device can be rendered smaller in size.

Furthermore, since the first on-off valve V1 and the second on-off valve V2 are disposed between the pump 30 and the motor 13, and the external tank 24 and the relief valve V3, the cylinder device can be prevented from size increase. Still furthermore, since the position of center of gravity is set near the central axis of the piston rod 14, the cylinder device can be mounted in a stable state.

The present invention should not be limited by the first embodiment described above with reference to the drawings, but the technical scope of the present invention encompasses the following embodiments.
(1) Although the inner tank is formed in the space defined between the cylinder and the external cylinder in the first embodiment, the external cylinder may not be provided and the inner tank may not be formed.
(2) Although the external tank and the relief valve are disposed at the other side of right and left with respect to the central axis of the cylinder in the first embodiment, the relief valve may be disposed at another position.
(3) Although the relief valve is disposed at the same side as the external tank with respect to the central axis of the cylinder in the first embodiment, the first on-off valve and/or the second on-off valve may be disposed at the same side as the external tank.
(4) Although the pressure regulation valve is the relief valve in the first embodiment, any valve generating a damping force other than the relief valve may be used.
(5) Although the first and second on-off valves are disposed above the cylinder in the first embodiment, the first and second on-off valves may be disposed below the cylinder.

### Explanation of Reference Symbols

10 ... damper, 11 ... cylinder, 12 ... first bracket, 13 ... piston, 14 ... piston rod, 15 ... second bracket, 30 ... pump, 31 ... motor, 24 ... external tank (tank), T1 to T6 ... passages (T1 ... first passage, T2 ... second passage, T3 ... third passage, T4 ... fourth passage, T5 ... fifth passage and T6 ... discharge passage), V1 to V3 .... valves (V1 ... first on-off valve, V2 ... second on-off valve and V3 ... relief valve).

## Claims

1. A cylinder device comprising:
a damper having a cylinder, a first bracket coupled to one of two ends of the cylinder, a piston slidably inserted into the cylinder, a piston rod inserted into the cylinder and having one of two ends coupled to the piston, and a second bracket coupled to the other end of the piston rod;
a pump disposed at one of right and left sides with respect to a central axis of the cylinder and supplying an operating fluid to the damper;
a motor disposed at the one side of right and left which is the same side as the pump with respect to the central axis of the cylinder and driving the pump; and
a tank disposed at the other side of right and left with respect to the central axis of the cylinder and storing the operating fluid.

2. The cylinder device according to claim 1, further comprising a valve provided in a passage communicating between the cylinder and the tank, the valve being disposed at the other side of right and left with respect to the central axis of the cylinder, which other side is the same side as the tank is disposed.

3. The cylinder device according to claim 2, wherein:
the cylinder has an interior divided by the piston into a rod-side chamber and a piston-side chamber;
the passage includes a first passage communicating between the rod-side chamber and the tank, a second passage communicating between the piston-side chamber and the tank, a third passage diverging from the first passage and joining the second passage, and a discharge passage diverging from the third passage and joining the first passage; and
the valve includes a pressure regulation valve disposed at the other side of right and left which is the same side as the tank with respect to the central axis of the cylinder and imparting a resistance to the operating fluid passing through the discharge passage; a first on-off valve disposed between the pump and the motor, and the pressure regulation valve and the tank, the first on-off valve opening and closing the second passage; and a second on-off valve disposed between the pump and the motor, and the pressure regulation valve and the tank, the second on-off valve opening and closing the third passage.
